# EUROPEAN PATENT APPLICATION

(11) **EP 2 075 150 A2**
(43) Date of publication of application: **01.07.2009**
(21) Application number: 08173018.6
(22) Date of filing: 29.12.2008
(51) Int. Cl.: B60K 15/067

(54) **Pressure Vessel**

(30) Priority: 31.12.2007 US 967955
(71) Applicant: PACCAR INC., Bellevue, WA 98804 (US)
(72) Inventor: VanderGriend, Bennett Lee, Woodinville, WA 98077 (US); Johnson, Erik Scott, Snoqualmie, WA 98065 (US); Kimball, Kyle James, Maple Valley, WA 98038 (US)
(74) Representative: Tranter, Andrew David

(57) **Abstract**

The present disclosure provides a tank (420) for containing fluids. The tank includes an elongated hollow body (424) having an interior and an exterior, and an integrated internal support structure (450) disposed on the interior of the elongated hollow body. The tank includes at least one feature (442,446) formed along the exterior of the elongated hollow body that is adapted to receive an external component.

## Description

### BACKGROUND

Heavy-duty trucks require large capacity fuel tanks to hold a sufficient amount of fuel for hauling long distances. These large fuel tanks are often cylindrically shaped and are mountable to a portion of the truck, such as the truck frame rail. Many other components are also typically mated to the frame rail, such as air tanks, battery packs, etc. With new requirements for reducing vehicle emissions, additional equipment must be included on the frame rail to filter the exhaust generated by the vehicle. Thus, there is a need to either reduce the size of these components or otherwise package these components together to efficiently use available frame rail space.

### SUMMARY

The present disclosure provides a tank for containing fluids, such as pressurized gas or liquid. The tank includes an elongated hollow body having an interior and an exterior, and an integrated internal support structure disposed on the interior of the elongated hollow body. The tank includes at least one feature formed along the exterior of the elongated hollow body that is adapted to receive an external component.

The present disclosure further provides a tank assembly having a first tank and a second tank. The first tank includes an first elongated hollow body having an interior and an exterior, and a first integrated internal support structure extending along the interior of the first elongated hollow body. A first attachment feature is formed on the exterior of the first elongated hollow body. The second tank includes an interior and an exterior, and a second attachment feature formed on the exterior of the second tank that is mateable with the first attachment feature for securing the second tank to the first tank

The present disclosure also provides a vehicle tank for containing fluids, wherein the vehicle tank includes an elongated hollow body having an interior and an exterior and first and second open ends. The elongated body includes a shape that is adapted to be used as a structural component for a vehicle and an integrated internal support structure extending along the interior of the elongated hollow body. The vehicle tank further includes first and second end caps secured to the first and second open ends of the elongated hollow body. At least one of the first and second end caps includes an opening for placing the interior of the elongated hollow body into communication with a vehicle component.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the present disclosure will become more readily appreciated by reference to the following detailed description, when taken in conjunction with the accompanying drawings, wherein:
FIGURE 1 is an environmental view of first and second representative embodiments of tank assemblies shown in conjunction with a vehicle;
FIGURE 2 is an isometric view of the first representative embodiment of the tank assembly shown in FIGURE 1;
FIGURE 3 is a side view of an alternate embodiment of a portion of the first tank assembly embodiment shown in FIGURE 2;
FIGURE 4 is an isometric view of the second representative embodiment of the tank assembly shown in FIGURE 1;
FIGURE 5 is a side cross-sectional view of a third representative embodiment of a tank assembly;
FIGURE 6 is a side cross-sectional view of a fourth representative embodiment of a tank assembly;
FIGURE 7 is a side cross-sectional view of a portion of the fourth tank assembly embodiment of FIGURE 6 shown coupled to a vehicle frame rail;
FIGURE 8 is an isometric view of a fifth representative embodiment of a tank assembly;
FIGURE 9 is an isometric view of the fifth tank assembly embodiment shown coupled to a tank assembly of substantially similar design;
FIGURE 10 is an isometric view of a sixth representative embodiment of a tank assembly;
FIGURE 11 is an isometric view of a seventh representative embodiment of a tank assembly;
FIGURE 12 is a side view of a portion of the seventh tank assembly embodiment shown in FIGURE 11;
FIGURE 13 is an isometric view of an end cap shown coupled to the end of a tank assembly; and
FIGURE 14 is a cross-sectional view of the end cap of FIGURE 13.

### DETAILED DESCRIPTION

Embodiments of the present disclosure are directed to tank assemblies for holding fluids, such as fuel, air, water, etc., which may be pressurized. Specifically, embodiments of the present disclosure are directed to tank assemblies that include, but are not limited to, multiple compartments for holding multiple types of fluids, cavities for receiving other components, external features that cooperate with other portions of the vehicle, and/or attachment points for securing other components or other tanks thereto. Although exemplary embodiments of the present disclosure will be described hereinafter with reference to a commercial vehicle, it should be appreciated that aspects of the present disclosure have wide application and may be suitable for use in other applications, such as with yachts, recreational vehicles, or other devices. Accordingly the following descriptions and illustrations herein should be considered illustrative in nature and, thus, not limiting the scope of the present disclosure.

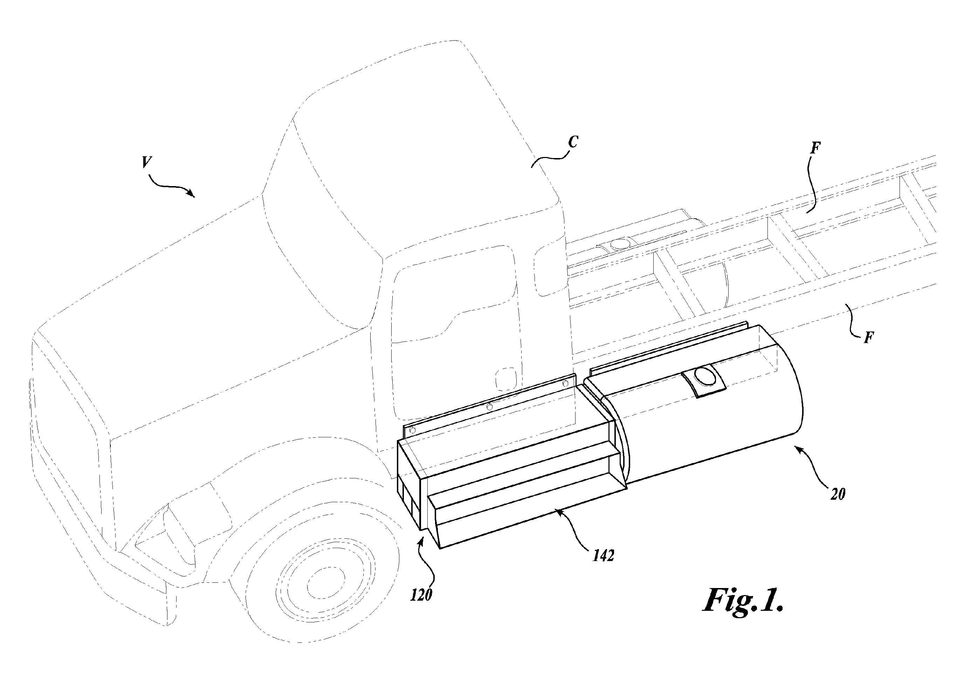

Referring to FIGURE 1, first and second embodiments of tank assemblies 20 and 120 formed in accordance with the present disclosure are shown in combination with a vehicle V. In the embodiment shown, the vehicle V is a heavy duty truck having a cab C secured on parallel frame rails F, as is well known in the art. The first tank assembly 20 is shown mounted to a frame rail F behind the cab C, and the second tank assembly 120 is shown mounted to a frame rail F beneath the cab C. It should be appreciated that multiple first and/or second tank assemblies 20 and 120 may be mounted to the vehicle V, and the tank assemblies may be mounted in any suitable location.

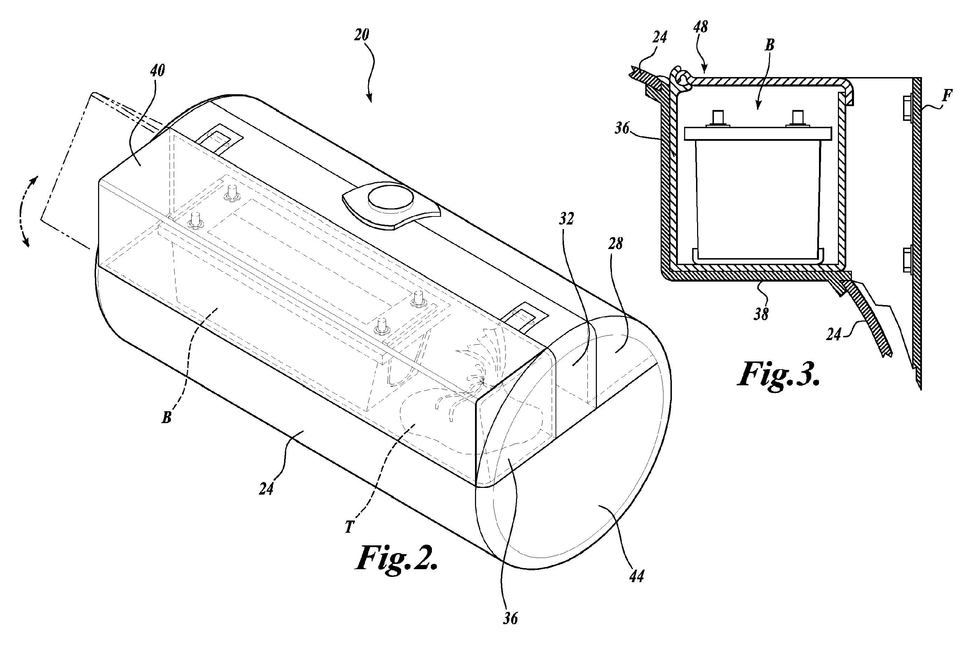

Referring to FIGURE 2, the first tank assembly 20 is shown in more detail. As best shown in FIGURE 2, the first tank assembly 20 includes a shell 24 that is preferably cylindrical in shape and includes several interior compartments formed along the length of the shell 24. For instance, an upper portion of the shell 24 may be divided into a lateral tank compartment 28, a middle tank compartment 32, and a lateral recess 36. The lateral and middle tank compartments 28 and 32 are enclosed by the exterior surface of the shell 24 such that they form separate tanks within the shell 24 for holding fluids, such as air or water. Moreover, end caps 44 are secured to each open end of the shell 24 to enclose the interior of the shell 24 and the tank compartments 28 and 32 therein. The shell 24 may be extruded, metal formed, etc., employing any material suitable for holding the intended fluids and/or components.

In accordance with aspects of the present disclosure, the lateral recess 36 is formed on the exterior surface of the shell 24 and is adapted to receive an external vehicle component, such as a battery B or a tool set T, therein. The lateral recess 36 may be enclosed by a closure element 40 that is hingedly connected to an exterior portion of the shell 24 and is adapted to enclose vehicle components within the lateral recess 36. The closure element 40 preferably includes a lock, latch, etc. for securely stowing vehicle components therein and preventing theft and loss.

Referring to FIGURE 3, the lateral recess 36 may instead receive a storage box 48 therein rather than having a closure element 40 hingedly connected to the shell 24 and adapted to enclose the lateral recess 36. The storage box 48 may be any suitable storage box that is adapted to securely stow components, such as a battery B. The tank assembly 20 may be arranged on the vehicle V such that the storage box 48 is disposed between a portion of the tank assembly 20 and the frame rail F of the vehicle V. In this manner, the storage box 48 may be securely received on the tank assembly 20 without the need for additional hardware or attachment devices.

Still referring to FIGURE 3, portions of the tank assembly 20 may be welded together rather than extruding the tank assembly 20 as an integral piece. For instance, the shell 24 may include an opening when extruded that is adapted to receive the inner portion 38 of the lateral recess 36. The inner portion 38 may be mated to the shell 24 in any suitable manner and thereafter welded to the shell 24.

It should be appreciated that the first tank assembly 20 may instead be any other suitable shape and size, such as rectangular or square, and may include a variety of internal tank compartments and external recesses formed therein. For instance, the shell 24 may instead be rectangular-shaped or otherwise include a flat exterior surface to facilitate easier mounting of the tank assembly 20 to the frame rail F or another vehicle component, such as another tank assembly. Moreover, fewer or more internal tank compartments may be defined within the tank assembly 20 for holding fewer or more fluids therein, and fewer or more external recesses or other features may be formed in the tank assembly 20 for receiving fewer or more vehicle components.

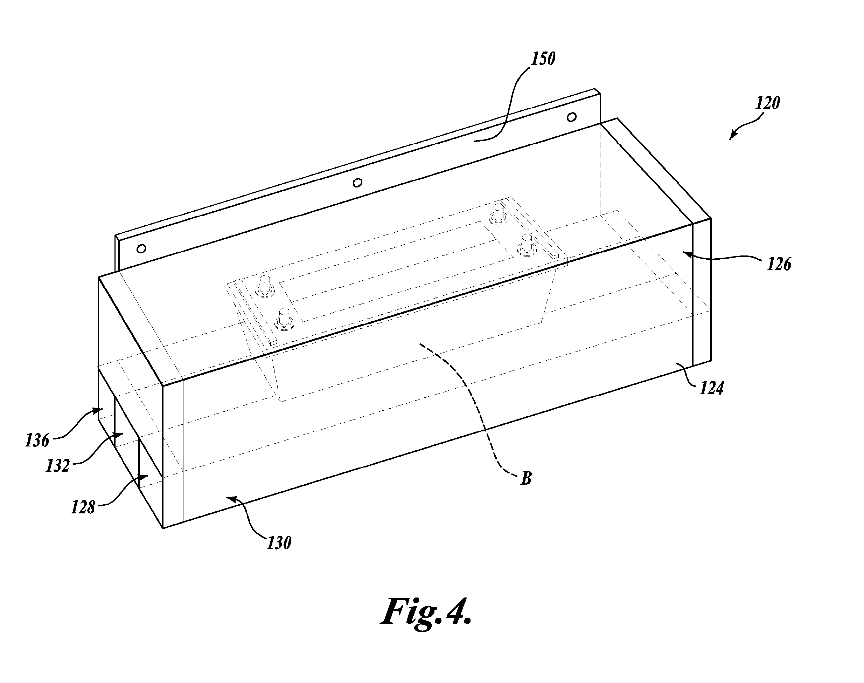

Referring to FIGURE 4, the second tank assembly 120 will now be described in more detail. The second tank assembly 120 includes a rectangular shell 124 that is adapted to store vehicle components therein, such as a battery B. The rectangular shell 124 defines a container portion 126 for housing the battery B and a floor portion 130 for supporting the battery B. The floor portion 130 is defined by three internal tank compartments 128, 132, and 136 extending along the length of the rectangular shell 124. The internal tank compartments 128, 132, and 136 may be any suitable shape and size adapted to hold a desired liquid therein.

The rectangular shell 124 and internal tank compartments 128, 132, and 136 may be extruded as one integral piece or formed as separate extruded pieces and thereafter mated together in a suitable manner, such as by welding. A suitable end cap (not shown) may be mated with the end opening of the rectangular shell to enclose the container portion 126 and the internal tank compartments 128, 132, and 136.

The second tank assembly 120 may also include a door or other suitable opening (not shown) for accessing the battery B. The door may be formed in the container portion 126 of the rectangular shell 124. The second tank assembly 120 may also include a stair assembly 142 mounted to an external surface of the rectangular shell 124. In this manner, the tank assembly 120 may be mounted on the frame rail F beneath the cab C and positioned below a door in the cab C for providing access to the interior of the cab C. (See FIGURE 1.) The second tank assembly 120 may instead be mounted to other portions of the vehicle V, such as aft of the cab on the frame rails to allow mid-chassis access or on the rear surface of the cab C for providing access to an upper portion of the cab C. The tank assembly 120 may be mounted to the vehicle V in any suitable manner, such as with a bracket 150.

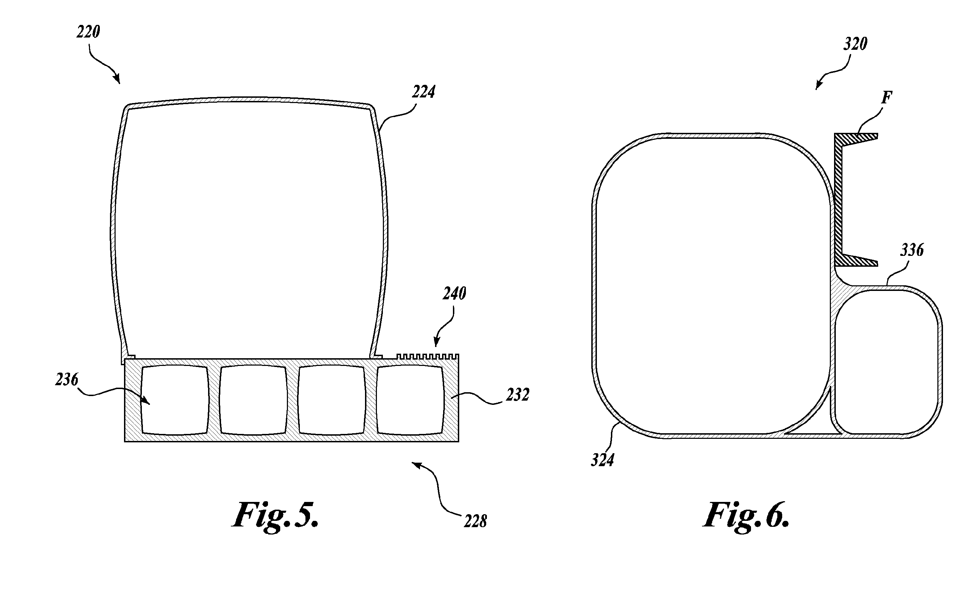

Referring now to FIGURE 5, a third embodiment of a tank assembly 220 formed in accordance with the present disclosure will now be described in greater detail. The tank assembly 220 includes a main tank shell 224 that is formed by extrusion or any other suitable process and is adapted to be secured to a secondary tank assembly 228. The secondary tank assembly 228 is preferably defined by a base structure 232 having a plurality of secondary tank compartments 236 defined therein.

The main tank shell 224 has any suitable shape that is adapted to be coupled to the secondary tank assembly 228. Preferably, the main tank shell 224 is substantially rectangular in shape and includes an opening along one side thereof where the main tank shell 224 is adapted to be secured to the secondary tank assembly 228. In this manner, the secondary tank assembly 228 encloses the interior of the main tank shell 224. The main tank shell 224 may instead include a substantially straight external surface that is adapted to be secured to the secondary tank assembly 228; however, it is preferred to eliminate a portion of the main tank shell 224 to reduce the overall weight of the tank assembly, thereby maximizing fuel efficiencies. The main tank shell 224 is secured to the base structure 232 of the secondary tank assembly 228 in any suitable manner, such as by welding.

Preferably, the secondary tank assembly 228 is at least as wide as the main tank shell 224 to maximize the number of secondary tanks 236 formed therein. However, a portion of the base structure 232 of the secondary tank assembly 228 may instead extend outwardly from beneath the main tank shell 224 to define a step portion 240. The step portion 240 may be used, for instance, for accessing an area above the main tank shell 224 when the tank assembly 220 is mounted to the vehicle V.

Referring now to FIGURE 6, a fourth embodiment of a tank assembly 320 formed in accordance with the present disclosure will now be described in greater detail. The tank assembly 320 includes a main tank shell 324 and a secondary tank shell 336 that are preferably extruded together as one integral piece. The secondary tank shell 336 may be formed along a bottom portion of the main tank shell 324 such that the main tank shell 324 may be mated to, for instance, the frame rail F of a vehicle V with the secondary tank shell 336 being disposed beneath the frame rail F. In this manner, a portion of the tank assembly 320 can be nestled beneath the frame rail F, thereby maximizing available frame rail space for other vehicle components.

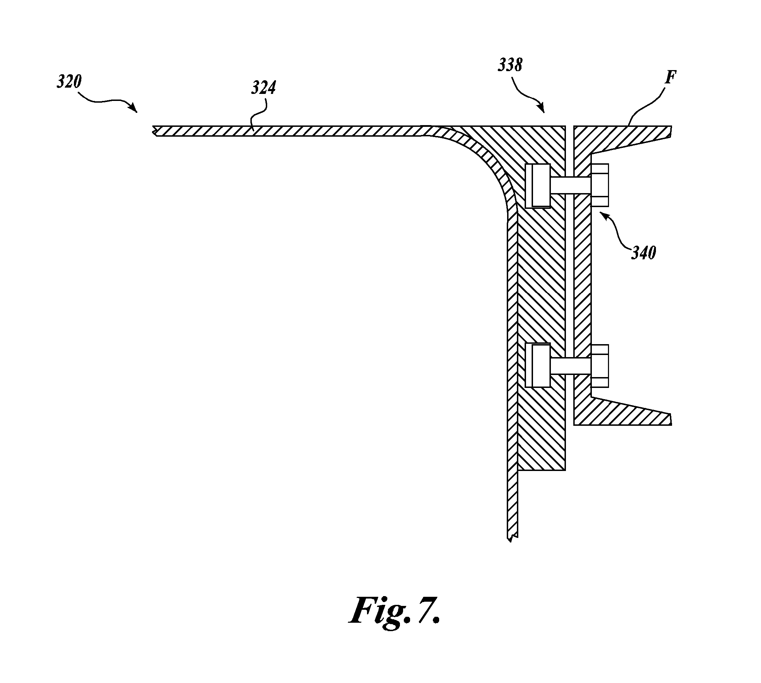

FIGURE 7 depicts one representative embodiment of an attachment assembly 338 for securing the tank assembly 320 to the frame rail F. It should be understood that the representative attachment assembly 338 may be used to secure any of the representative tank assemblies to the frame rail F, another portion of the vehicle V, or another tank assembly. The attachment assembly 338 includes first and second bolt assemblies that pass through a portion of the main tank shell 324 and the frame rail F. Any suitable bolt assembly may be used and it should be appreciated that other fastening devices may instead be used, such as clips, belts, etc.

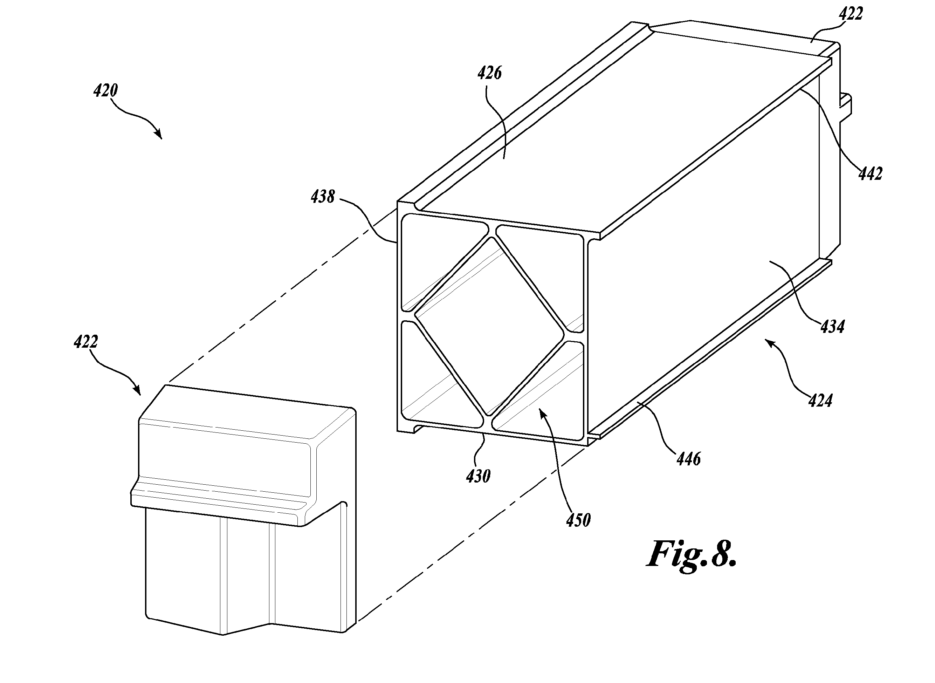

Referring now to FIGURE 8, a fifth embodiment of a tank assembly 420 formed in accordance with the present disclosure will be described in greater detail. The tank assembly 420 includes a rectangular tank shell 424 having an extruded, integrated internal support structure 450 defined therein. The internal support structure 450 may be any suitable cross-sectional shape or design to help reduce hoop or axial stress in the tank assembly 426. For instance, the internal support structure 450 may define a plurality of internal compartments within the rectangular shell 424 to help reduce the hoop and axial stress in the tank assembly 426. A plurality of openings (not shown) may be formed in the internal support structure 450 to place each of the internal compartments into fluid communication with the other compartments.

The rectangular tank shell 424 includes an upper surface 426, a lower surface 430, a first side surface 434, and a second side surface 438. The rectangular shape of the tank shell 424 allows the tank shell 424 to be coupled to other square or rectangularly-shaped tanks or vehicle components. First and second attachment portions, or first and second flanges 442 and 446, are formed on the rectangular tank shell 424 and are adapted to couple the rectangular tank shell 424 to another similar tank. The first flange 442 extends outwardly from an upper portion of the first side surface 434 and is substantially flush with the upper surface 426. The second flange 446 extends outwardly from the first side surface 434 near the bottom of the first side surface 434; however, the second flange 446 is not flush with the lower surface 430 of the extruded tank shell 424. Rather, the second flange 446 is offset from the lower surface 430 at about the same distance as the thickness of the first flange 442 such that the first flange 442 of an adjacent tank assembly may be received therebeneath.

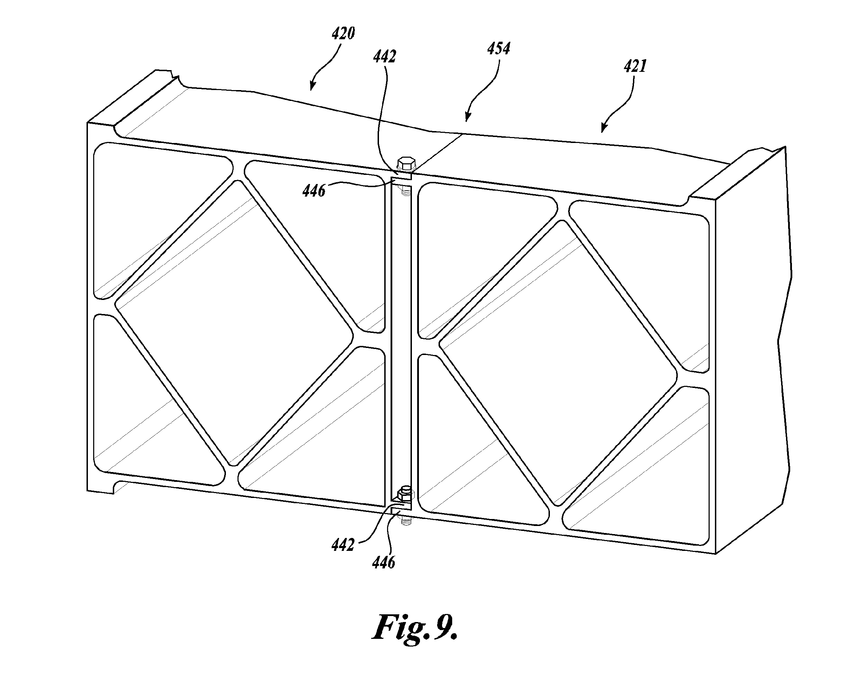

Referring to FIGURE 9, the upper and lower attachment portions 442 and 446 are used to secure a first tank 420 to a second similar tank 421. To assemble the tanks together, the first tank 420 is positioned adjacent the second tank 421 such that the second flange 446 of the second tank 420 is positioned near the first flange 442 of the first tank 420, and the second flange 446 of the first tank 420 is positioned near the first flange 442 of the second tank 420. With the first and second tanks 420 and 421 positioned as such, the tanks 420 and 421 may be mated together such that the second flange 446 of the second tank 420 slides beneath the first flange 442 of the first tank 420 and the first flange 442 of the second tank 420 slides beneath the second flange 446 of the first tank 420. A bolt or other similar fastening device may thereafter be passed through the first and second flanges 442 and 446 of the first and second tanks 420 to secure the tanks together.

Referring back to FIGURE 8, an end cap 422 may be secured to each open end of the extruded rectangular tank shell 424 to enclose the interior of the extruded rectangular tank shell 424. The end cap 422 may include multiple different faces that are adapted to cover different tank compartments in the interior of the extruded rectangular tank shell 424. The faces may be positioned at different angles such that when a hose is placed into communication with an interior tank compartment of the rectangular tank shell 424 through the end cap 422, the hose is angled away from the tank assembly 420 in a desired direction. For instance, the hoses may extend away from an end cap of a tank assembly 120 toward the engine, transmission, etc., of the vehicle V beneath the hood of the cab C. Thus, the end caps are designed to angle the hoses toward an appropriate vehicle component for ease of installation and assembly.

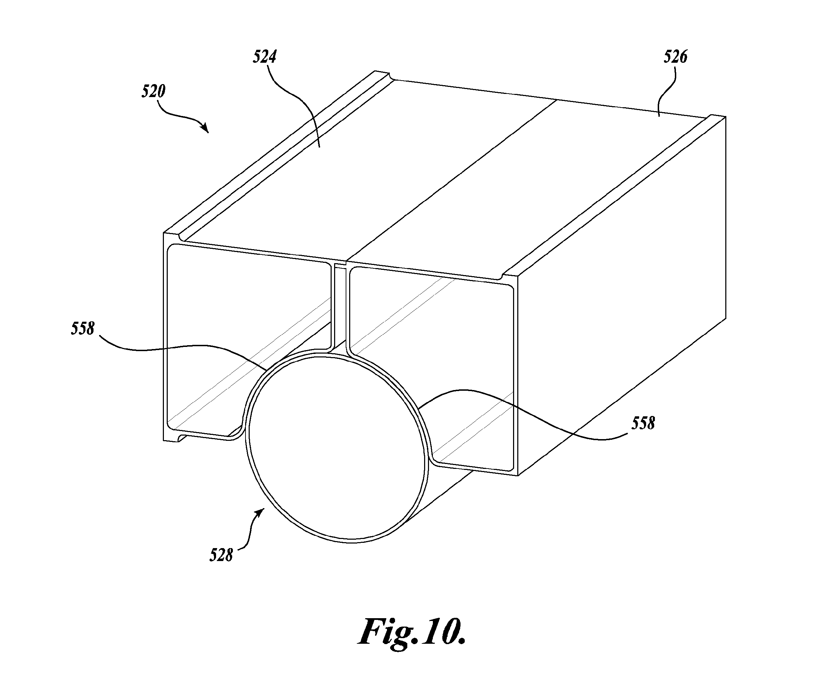

Referring to FIGURE 10, a sixth embodiment of a tank assembly 520 formed in accordance with the present disclosure will be described in detail. The tank assembly 520 includes a first substantially rectangular tank shell 524 positioned adjacent to and connected to a second substantially rectangular tank shell 526. The first and second rectangular tank shells 524 and 526 are secured together in a similar manner as described above with respect to the first and second tank shells 420 and 421.

The first and second rectangular tank shells 524 and 526 each include a quarter circle recess 558 formed in a bottom corner thereof. When the first and second rectangular tank shells 524 and 526 are secured together, the quarter circle recess 558 of each tank shell 524 and 526 cooperatively define a semicircular recess that is adapted to receive a portion of a circular tank shell 528 therein. The circular tank shell 528 may be secured to the first and second rectangular tank shells 524 and 526 in any suitable, such as with fasteners or by welding. Securing tanks of different shapes and sizes together in this manner provides for easier attachment of odd shaped tanks, such as a circular tank, container, or vessel. It should be appreciated that other tanks of various shapes and sizes may be mated together in a similar manner.

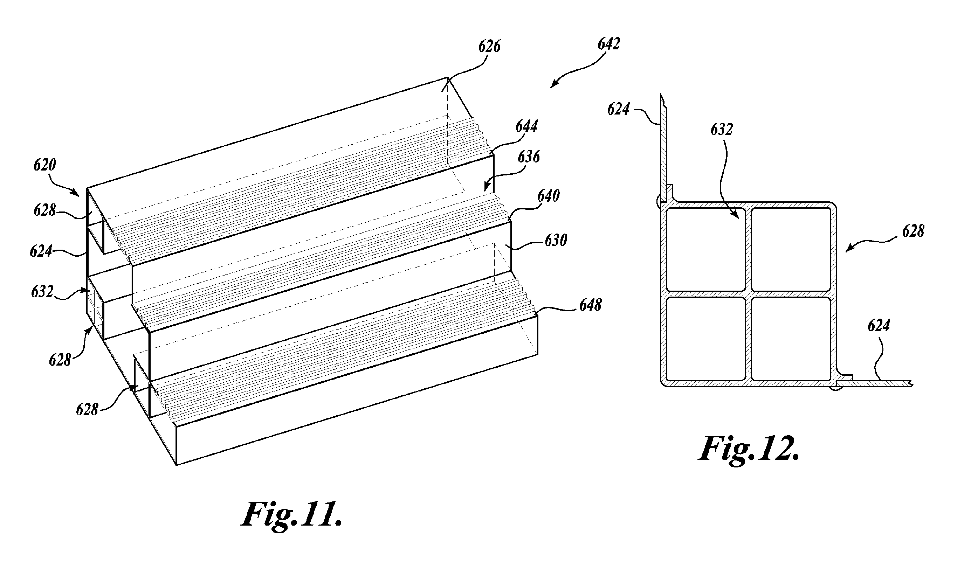

Referring to FIGURE 11, a seventh representative embodiment of a tank assembly 620 will now be described in more detail. The tank assembly 620 includes a rectangular shell 624, adapted for storing fluids therein. A plurality of internal tank compartments 628 may be formed on the interior of the rectangular shell 624 that extend along the length of the rectangular shell 624. For instance, an internal tank compartment 628 may be formed at both lower corners of the interior of the rectangular shell 624, and at one upper corner of the interior of the rectangular shell 624. The internal tank compartments 628 may be any suitable shape and size adapted to hold a desired liquid therein.

Referring to FIGURES 11 and 12, the rectangular shell 624 and the internal tank compartments 628 may include an internal support structure 632 formed therein and extending along the length of the tank assembly 620 for adding strength to the tank assembly 620 (an internal support structure is only shown in one internal compartment 628 for clarity). The internal support structure 632 may be any suitable cross-sectional shape or design to help reduce hoop and axial stresses in the tank assembly 620 or in a tank compartment 628.

Referring to FIGURE 11, one of the upper corners of the rectangular shell 624 includes a recess 636 formed therein and extending along the length of the rectangular shell 624. The recess 636 is substantially L-shaped in cross section and is formed at the corner defined by an upper surface 626 of the rectangular shell 624 and a front surface 630 of the rectangular shell 624. The L-shaped recess 636 defines a middle step 640 of a stair assembly 642. An upper step 644 is defined by the upper surface 626 of the rectangular shell 624. If necessary, an additional lower step 648 may be formed on the front surface 630 of the rectangular shell 624 that extends along the length thereof and is positioned beneath the middle step 640. The second tank assembly 620, which also defines a stair assembly 642, may be mounted on the frame rail F beneath the cab C and positioned below a door in the cab C for providing access to the interior of the cab C. (See FIGURE 1.) The second tank assembly 620 (or stair assembly 642) may instead be mounted to other portions of the vehicle V, such as aft of the cab on the frame rails to allow mid-chassis access or on the rear surface of the cab C for providing access to an upper portion of the cab C.

Referring to FIGURE 12, the rectangular shell 624 and internal tank compartments 628 may be extruded as one integral piece or formed as separate extruded pieces and thereafter mated together in a suitable manner, such as by welding. The same is true for the L-shaped recess 636 formed within the rectangular shell 624. The recess 636 may be formed in the rectangular shell 624 during the extrusion process or, instead, an opening may be formed in the corner of the rectangular shell 624, and an L-shaped elongated piece may instead be thereafter welded in place to close the opening in the rectangular shell 624 and define a middle step 640. Of course, other fabricating methods are contemplated to be within the scope of the claimed subject matter.

Although the second tank assembly 620 is shown with three internal tank compartments 628 and one external recess 636, the second tank assembly 620 may instead be formed with fewer or more internal tank compartments 628 and external recesses 636. Moreover, any suitable end cap or closure element may be secured to each open end of the rectangular shell 624 to enclose the interior of the rectangular shell 624 and the internal tank compartments 628 therein.

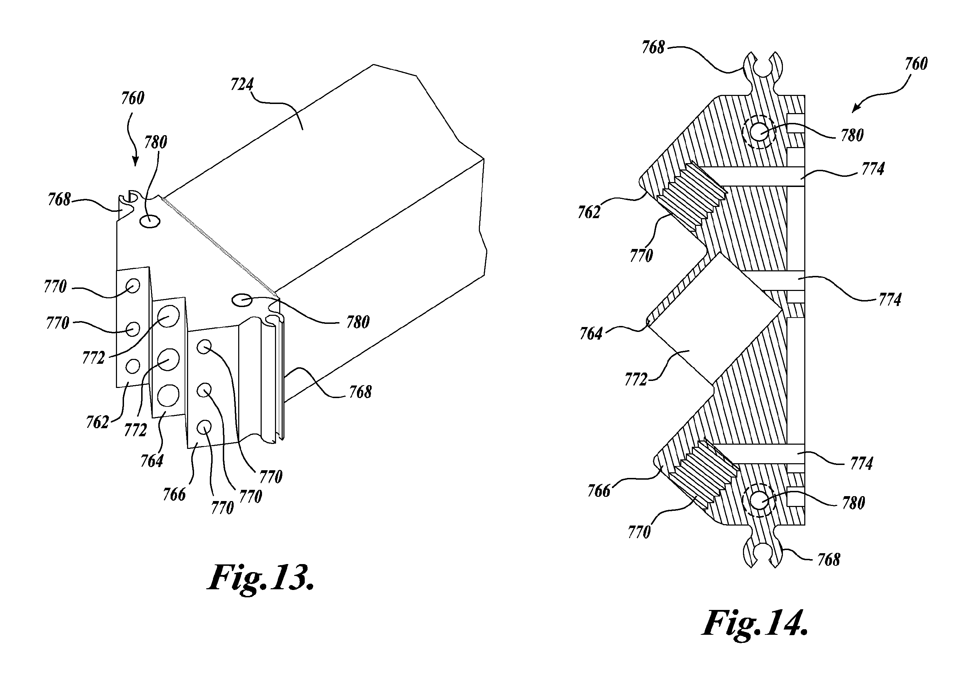

Referring to FIGURES 13-14, an alternate embodiment of an end cap for an open end of an extruded tank shell is shown. The end cap 760 is preferably extruded or formed in any other suitable manner to define first, second, and third angled faces 762, 764, and 766, respectively, that face outwardly at an angle from the open end of a tank shell 724 when the end cap 760 is secured to the tank shell 724. The first, second, and third angled faces 762, 764, and 766 are formed at a desired angle to direct hoses, when coupled to the end cap, toward a specific vehicle component when the tank shell 724 is mounted to the vehicle V. It should be appreciated that any number of angled faces may be used, and the faces may be formed at any desired angle.

The end cap 760 includes a plurality of openings formed within each angled face 762, 764, and 766 that extend inwardly toward the open end of the tank shell 724. Each opening is adapted to receive a hose, tube, or other suitable conduit to place the internal contents of the tank shell 724 into external communication with a vehicle component. The openings may be positioned to place a particular internal compartment of the tank shell 724 into communication with a particular vehicle component, and the openings may be of different shapes and sizes to accept connector fittings of hoses, tubes, and conduits of different shapes and sizes. For instance, a first set of openings 770 may be formed on the first and third angled faces 762 and 766, and a second set of openings 772 may be formed on the second angled face 764.

As shown in FIGURE 13, the first set of openings 770 may include a flared portion for threadably receiving a threaded end of a hose therein to secure the hose to the end cap 760. The second set of openings 772 may be larger in diameter for accepting tubes, hoses, or conduits larger in diameter. Each hole 770 or 772 is fluidly connected to a passageway 774 that extends toward the interior of the tank shell 724. Each passageway 774 may be fluidly connected to a different interior compartment of the tank shell 724 or, instead, all the passageways 774 may be in fluid communication the tank shell 724.

Referring to FIGURES 13 and 14, the end cap 760 may further include a pair of lateral transverse screw bosses 768 formed transversely along each edge of the end cap 760. The screw bosses 768 may be used, for example, to help mount the tank shell 724 to a portion of the vehicle V. In the alternative, holes 780 may be drilled or extruded in the cap and may be threaded to mount the tank assembly 724 to a portion of the vehicle V.

While illustrative embodiments have been illustrated and described, it will be appreciated that various changes can be made therein without departing from the spirit and scope of the present disclosure. More specifically, the various features of each of the above-described tank assemblies may be combined with any of the other tank assemblies if desired, and each tank assembly may include further features not illustrated in the FIGURES. For instance, each of the tank assemblies may include an external step portion formed along the length of the tank assembly to define a step for accessing an upper portion of the vehicle. Moreover, any of the tank assemblies may include an internal structure for providing added support, internal compartments for holding different fluids, or external recesses for receiving an external component or another tank. Finally, each of the tank assemblies may include attachment portions for securing the tank assembly to another tank or to a vehicle component. Thus, the above-described embodiments should be seen as illustrative and not limiting the scope of the claimed subject matter.
The embodiments of the invention in which an exclusive property or privilege is claimed are defined as follows:

## Claims

1. A tank for containing fluids, the tank comprising:
(a) an elongated hollow body having an interior and an exterior;
(b) an integrated internal support structure disposed on the interior of the elongated hollow body; and
(c) at least one feature formed along the exterior of the elongated hollow body that is adapted to receive an external component.

2. The tank of Claim 1, further comprising at least one attachment feature formed on the exterior of the elongated hollow body, the attachment feature adapted to couple the tank to another component.

3. The tank of Claim 2, wherein the elongated hollow body and the elongated internal support structure are extruded.

4. The tank of Claim 2, wherein a flange defines the at least one attachment feature.

5. The tank of Claim 1, wherein the at least one feature formed along the exterior of the elongated hollow body is a recess, and wherein the external component is an air tank that substantially conforms to the shape of the recess.

6. The tank of Claim 1, further comprising an elongated step portion formed along an exterior portion of the elongated hollow body.

7. A tank assembly, comprising:
(a) a first tank, comprising:
(i) a first elongated hollow body having an interior and an exterior;
(ii) a first integrated internal support structure extending along the interior of the first elongated hollow body; and
(iii) a first attachment feature formed on the exterior of the first elongated hollow body;
(b) a second tank having an interior and an exterior, the second tank having a second attachment feature formed on the exterior of the second tank that is mateable with the first attachment feature for securing the second tank to the first tank.

8. The tank assembly of Claim 7, wherein the second tank is defined by a second elongated hollow body.

9. The tank assembly of Claim 8, wherein the second tank further comprises a second integrated internal support structure disposed on the interior of the second elongated hollow body.

10. The tank assembly of Claim 8, further comprising an elongated step portion formed along an exterior portion of the first or second elongated hollow body.

11. The tank assembly of Claim 7, further comprising at least one recess formed on the exterior of the first elongated hollow body that is adapted to receive an external component.

12. The tank assembly of Claim 7, wherein the first elongated hollow body and the first internal support structure are extruded.

13. The tank assembly of Claim 7, wherein a first flange defines the first attachment feature and a second flange defines the second attachment feature, the first and second flanges mateable together to secure the second tank to the first tank.

14. The tank assembly of Claim 7, wherein the first elongated body includes first and second open ends.

15. The tank assembly of Claim 14, further comprising first and second end caps couplable to the first and second open ends of the first elongated hollow body to enclose the interior of the first elongated hollow body.

16. The tank assembly of Claim 15, wherein the first end cap is adapted to place the interior of the first elongated hollow body into fluid communication with at least one external component.

17. The tank assembly of Claim 15, wherein the first end cap includes at least one opening in communication with the interior of the first elongated hollow body, the at least one opening adapted to receive a conduit such that the conduit is directed towards at least one external component.

18. A vehicle tank for containing fluids, the vehicle tank comprising:
(a) an elongated hollow body having an interior and an exterior and first and second open ends, the elongated body having a shape that is adapted to be used as a structural component for a vehicle and an integrated internal support structure extending along the interior of the elongated hollow body; and
(b) first and second end caps secured to the first and second open ends of the elongated hollow body, at least one of the first and second end caps including an opening for placing the interior of the elongated hollow body into communication with a vehicle component.

19. The vehicle tank of Claim 18, further comprising at least one attachment feature formed on the exterior of the elongated hollow body, the attachment feature adapted to couple the tank to another component.

20. The vehicle tank of Claim 18, wherein the opening in the end cap is positioned at a predetermined angle relative to the first or second end of the extruded elongated hollow body.
